## Europäisches Patentamt

## European Patent Office

## Office européen des brevets

(19)

(11) Veröffentlichungsnummer: **0 172 998**
**A1**

(12) # EUROPÄISCHE PATENTANMELDUNG

(21) Anmeldenummer: 85106363.6

(22) Anmeldetag: 23.05.85

(51) Int. Cl.⁴: **G 01 B 7/14,** G 01 D 5/20

(30) Priorität: 30.05.84 DE 3420330

(43) Veröffentlichungstag der Anmeldung: 05.03.86
Patentblatt 86/10

(84) Benannte Vertragsstaaten: AT BE CH DE FR GB IT LI NL
SE

(71) Anmelder: Deutsche Forschungs- und Versuchsanstalt
für Luft- und Raumfahrt e.V., Linder Höhe,
D-5000 Köln 90 (DE)

(72) Erfinder: Dietrich, Johannes, Am Buchenstock 30,
D-8031 Gilching (DE)
Erfinder: Gutjahr, Johann, Goethestrasse 1,
D-8031 Eichenau (DE)

(74) Vertreter: von Kirschbaum, Albrecht, Dipl.-Ing.,
Hermann-Ehlers-Strasse 21a, D-8034 Germering (DE)

(54) Induktiver Sensor und Verfahren zur berührungslosen, dreidimensionalen Positionserfassung von Löchern, Bohrungen, Bolzen, Niete u.ä. in Metallteilen mittels eines solchen Sensors.

(57) Ein induktiver Sensor zur berührungslosen, dreidimensionalen Positionserfassung von Löchern, Bohrungen, Bolzen, Nieten u. ä. in bzw. an Metallteilen weist eine symmetrisch zu seiner Mittenachse angeordnete, vertikal ausgerichtete Sendespule (SS) auf, um welche herum symmetrisch auf einem Kreis vier identische, in gleichen Winkelabständen voneinander vertikal ausgerichtete Empfangsspulen (ES) angeordnet sind. Durch eine entsprechende Aufbereitung und Auswertung von in den Empfangsspulen induzierten Spannungen ist es mit Hilfe dieses induktiv arbeitenden Sensors möglich, beispielsweise die Lage von Löchern und Bohrungen (L) in metallischen Oberflächen (MT) dreidimensional zu messen. Bei einem Einsatz des Sensors an einem Roboterarm lassen sich die Roboterbewegungen auf solche Bohrungen oder Löcher zu stark beschleunigen und mit hoher Genauigkeit ausführen.

DIPL.-ING. A. v. KIRSCHBAUM
PATENTANWALT

D-8024 GERMERING.
HERMANN-BALLERSTR. 9a
0172998
TELEFON: (0 89) 8 41 10 46

Anwaltsakte: DFO-8508 EPA

Induktiver Sensor und Verfahren zur berührungslolosen, dreidimensionalen Positionserfassung von
Löchern, Bohrungen, Bolzen, Niete u.ä. in Metallteilen mittels eines solchen Sensors.

Die Erfindung betrifft einen induktiven Sensor sowie ein
Verfahren zur berührungslosen, dreidimensionalen Positionserfassung von Löchern, Bohrungen, Bolzen, Niete, u.ä.
in Metallteilen mittels eines solchen induktiven Sensors.

Bisher ist noch kein Sensor bekannt geworden, mit welchem
beispielsweise die Hand eines Roboters schnell und genau
so bewegt werden kann, daß die Hand beispielsweise mittig
bezüglich Löchern oder Bohrungen ausgerichtet ist, damit
beispielsweise Niete gesetzt oder Schraubbolzen eingedreht werden können, oder daß auch beispielsweise in der
Autoindustrie schnell und genau Schutzkappen in Löcher
eingedrückt werden können, wie sie beispielsweise in Radkästen, Front- oder Bodenblechen u.ä. ausgebildet sind.

Gemäß der Erfindung soll daher ein induktiver Sensor geschaffen werden, mit welchem ohne irgendeine Berührung
dreidimensional die Lage bzw. Position von Löchern, Bohrungen, Bolzen, Niete u.ä., welche in Metallteilen ausgebildet bzw. an oder in Metallteilen angebracht sind, erfaßbar ist. Ferner soll durch die Erfindung ein Verfahren
zur berührungslosen, dreidimensionalen Positionserfassung
von Löchern, Bohrungen, Bolzen, Niete u.ä. in bzw. an Metallteilen mittels eines solchen induktiven Sensors geschaffen werden, um dadurch beispielsweise Roboterbewegungen bzw. die Bewegungen einer Roboterhand auf solche Lö-

- 2 -

cher, Bohrungen, Bolzen, Niete u.ä. zu stark zu beschleunigen, und um solche Roboterbewegungen möglichst schnell und genau ausführen zu können.

Gemäß der Erfindung ist dies bei einem induktiven Sensor durch die Merkmale im kennzeichnenden Teil des Anspruchs 1 erreicht, wobei eine vorteilhafte Weiterbildung des erfindungsgemäßen Sensors in dem Unteranspruch 2 angegeben ist. Ferner ist dies bei einem Verfahren zur berührungslosen, dreidimensionalen Positionserfassung von Löchern, Bohrungen, Bolzen, Niete u.ä. in bzw. an Metallteilen mittels eines solchen induktiven Sensors durch die Merkmale im kennzeichnenden Teil des Anspruchs 3 erreicht. Eine vorteilhafte Weiterbildung des erfindungsgemäßen Verfahrens ist in dem Unteranspruch 4 angeführt.

Gemäß einer bevorzugten Ausführungsform der Erfindung ist in der Mitte des induktiven Sensors, symmetrisch zu dessen Mittenachse, eine vertikal ausgerichtete Sendespule vorgesehen, um welche symmetrisch auf einem Kreis vier identische, in gleichen Winkelabständen voneinander vertikal ausgerichtete Empfangsspulen so angeordnet sind, daß zumindest die Endflächen der vier Empfangsspulen in einer zu deren Mittenachsen und zur Mittenachse der Sendespule senkrecht verlaufenden Ebene liegen.

Bei diesem induktiven Sensor wird durch die in dessen Mitte angebrachte Sendespule ein magnetisches Feld erzeugt, dessen Form sowohl durch die Geometrie der Sendespule als auch durch deren Spulenkern beeinflußt werden kann. In den symmetrisch zu der Sendespule angeordneten Empfangsspulen werden durch das von der Sendespule erzeugte Streufeld Spannungen erzeugt, welche aufgrund der symmetrischen Anordnung in allen vier Empfangsspulen zunächst gleich groß sind. Wird nun eine metallische Fläche parallel zu dem Sensor in dessen Nähe gebracht, so wird dadurch eine Änderung der magnetischen Kopplung zwischen den Sende- und Empfangsspulen hervorgerufen, wodurch sich die in den Empfangsspulen induzierten Spannungen gleichartig ändern, weil die Symmetrie des Streufelds durch die parallel zum Sensor verlaufende Metallfläche oder -platte nicht störend beeinflußt wird.

Aus der Summe der in den Empfangsspulen des Sensors induzierten Spannungen kann dann unter Zuhilfenahme der nachstehend angeführten Gleichung beispielsweise der Abstand von dem Sensor zu der Metallfläche oder -platte ermittelt werden. Enthält die Metallfläche oder -platte beispielsweise eine Bohrung oder ein Loch oder ist in bzw. an der Metallplatte ein Niet, ein Schraubbolzen u.ä. angebracht, so bewirkt diese Veränderung in der sonst homogenen Metallfläche oder -platte eine Verformung des von der Sendespule des Sensors erzeugten Streufeldes, und zwar solange, bis die Sensorachse und die Achse durch den Mittelpunkt des Loches oder der Bohrung bzw. des Niets oder des Schraubbolzens miteinander zur Deckung gebracht sind. Dies gilt für alle zu ihrer Mittenachse bzw. zu ihrem Mittelpunkt symmetrischen, geometrischen Formen. Durch die von Löchern, Bohrungen bzw. Niete, Schraubbolzen u.ä. hervorgerufene Verformung des Streufelds werden in den vier symmetrisch angeordneten Empfangsspulen des Sensors verschieden große Spannungen induziert, aus welchen sich dann mit Hilfe der nachstehend angeführten Gleichungen der Abstand der Sensorachse von dem Mittelpunkt beispielsweise eines Loches, d.h. dessen Mittenabweichung, in der X- und der Y-Richtung ableiten läßt.

Hinsichtlich der Meßgenauigkeit und des Meßbereichs ist der Kreisdurchmesser von Bedeutung, auf welchem die vier Empfangsspulen angeordnet sind. Wenn bezüglich der Baugröße des Sensors kein Beschränkungen zu beachten sind, sollte gemäß einer bevorzugten Ausführungsform der Erfindung der Durchmesser des Kreises, auf welchem die vier Empfangsspulen angeordnet sind, vorzugsweise etwa gleich dem Durchmesser der zu erfassenden Löcher, Bohrungen, Bolzen, Niete u.ä. sein. Innerhalb des Bereichs des halben Durchmessers sowohl in positiver als auch in negativer X- und Y-Achsrichtung wird mit dem erfindungsgemäßen Sensor ein nahezu linearer Meßbereich erhalten, während für Regelzwecke die Grenzen etwa bei dem ± 0,9-fachen des Kreisdurchmessers liegen. Der Meßbereich in Richtung der Z-Achse liegt etwa bei dem doppelten Kreisdurchmesser. Ferner erhöht sich die Meßgenauigkeit in Richtung der X- und der Y-Achse, wenn der Abstand in Richtung der Z-Achse kleiner wird. Mit einer entsprechenden Auswerteelektronik lassen sich bei Verwendung des erfindungsgemäßen Sensors durchaus Auflösungen im Promillebereich erzielen.

Der induktive Sensor gemäß der Erfindung eignet sich besonders für einen Einsatz am Roboterarm. Hierbei kann der Sensor für alle Aufgaben eingesetzt werden, bei denen sich die Hand des Roboters mittig oder zentrisch zu Löchern oder Bohrungen ausrichten muß, um beispielsweise Niete zu setzen, Schraubbolzen einzudrehen oder Schutzkappen einzudrücken, wie es beispielsweise in der Autoindustrie zum Verschließen entsprechender Löcher beispielsweise in Radkästen, Front- und Bodenblechen u.ä. gefordert wird. Mit Hilfe des induktiven Sensors gemäß der Erfindung können die Bewegungen der Roboterhand auf ein solches Loch oder eine solche Bohrung zu innerhalb des linearen Sensormeßbereichs gesteuert werden, oder sie können auch geregelt erfolgen. Da mit Hilfe des induktiv arbeitenden Sensors die Lage bzw. Position von Löchern, Bohrungen, Bolzen, Niete u.ä. in metallischen Oberflächen berührungslos und dreidimensional erfaßbar ist, lassen sich Roboterbewegungen bzw. die Bewegungen der Roboterhand auf solche kreissymmetrische Formen oder Gegenstände zu im Vergleich zu den bisher durchführbaren Bewegungen stark beschleunigen und obendrein auch noch genauer ausführen. Durch den verhältnismäßig großen Meßbereich des induktiven Sensors gemäß der Erfindung und durch die gleichzeitige Erfassung von drei Koordinaten lassen sich die Roboterbewegungen beispielsweise beim Anfahren von Löchern sehr viel schneller und genauer durchführen, als es mit den bisher üblichen Verfahren möglich war.

Ferner kann mit dem induktiv arbeitenden Sensor gemäß der Erfindung auch die Lage von Löchern beispielsweise in Stanzblechen genau und ohne irgendeine Berührung bestimmt werden. Darüber hinaus kann der induktive Sensor gemäß der Erfindung auch bei homogenen Blechen, d.h. bei Blechen, in welchen keine Löcher ausgebildet sind oder in bzw. an welchen keine Niete oder Bolzen angebracht sind, dazu verwendet werden, um den Abstand zwischen dem induktiven Sensor und der Oberfläche des homogenen Bleches zu messen, und um beispielsweise die beiden Winkel zwischen der Sensorachse und der Flächennormalen auf der Oberfläche des Blechs zu erfassen.

Nachfolgend wird die Erfindung anhand von bevorzugten Ausführungsformen unter Bezugnahme auf die anliegenden Zeichnungen im einzelnen erläutert. Es zeigen:

Fig.1     eine Draufsicht auf einen induktiven Sensor gemäß der Erfindung;

Fig.2     eine Schnittansicht des Sensors nach Fig.1 entlang einer Linie A-B;

Fig.3     eine schematische, perspektivische Darstellung des induktiven Sensors der Fig.1 und dessen Anordnung über einem Metallteil mit Loch;

Fig.4     in Form eines Blockschaltbildes eine Schaltungsanordnung zur Durchführung des erfindungsgemäßen Verfahrens, und

Fig.5 . eine schematische Darstellung zur Erläuterung der Verwendung des induktiven Sensors der Fig.1 zur Bestimmung des Abstandes zwischen dem Sensor und der ebenen Oberfläche eines Bleches sowie zur Bestimmung von zwei Winkeln zwischen der Sensorachse und der Flächennormalen auf der Blechoberfläche.

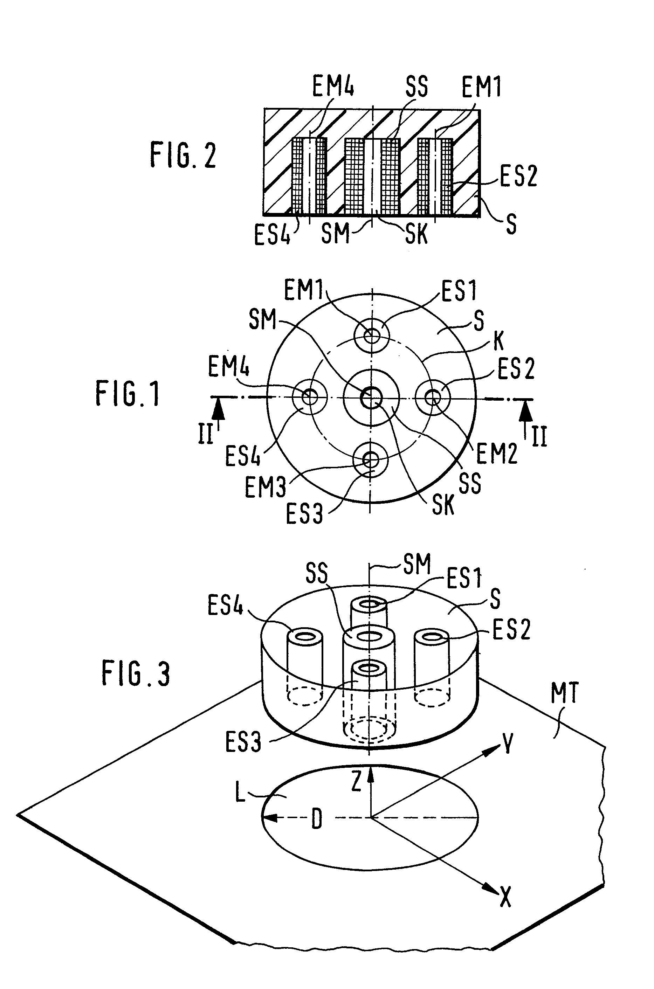

Anhand von Fig.1 und 2 wird nunmehr eine bevorzugte Ausführungsform eines induktiven Sensors S beschrieben, der vorzugsweise die Form eines Kreiszylinders aufweist. In der Mitte des Sensors S, und zwar symmetrisch zu dessen Mittenachse SM ist eine Sendespule SS angeordnet, in deren Mitte ein Spulenkern SK untergebracht ist. Symmetrisch zu der Sensor-Mittenachse SM sind auf einem Kreis K vier identisch aufgebaute und ausgeführte Empfangsspulen ES1 bis ES4 so angeordnet, daß sie vertikal ausgerichtet sind und ihre Mittenachsen EM1 bis EM4 parallel zu der Mittenachse SM der Sendespule SS und damit des Sensors S verlaufen, wie aus der Schnittansicht der Fig.2 zu ersehen ist. Hierbei liegen die freien, in Fig.2 unten angeordneten Endflächen der vier Empfangsspulen ES1 bis ES4 in einer zu ihren Mittenachsen EM1 bis EM4 und zur Mittenachse SM der Sendespule SS senkrecht verlaufenden Ebene, wie ebenfalls aus der Schnittansicht der Fig.2 zu ersehen ist. Sowohl die Sendespule SS als auch die vier Empfangsspulen ES1 bis ES4 sind in einem geeigneten Kunstharz vergossen, damit die Spulen ihre Ausrichtung sowie ihre gegenseitige Zuordnung beibehalten.

In Fig.3 ist in perspektivischer Darstellung schematisch die Anordnung des induktiven Sensors S über einem Metallteil MT in Form eines Blechs oder einer Metallplatte dargestellt. In dem Metallteil MT ist ein Loch L mit einem Durchmesser D ausgebildet. Ferner sind in Fig.3 die senkrecht zueinander verlaufenden, drei Koordinatenachsen, nämlich die X-, die Y- und die Z-Achse, dargestellt, wobei der Koordinatenursprung genau in der Mitte des Loches L liegt. Hierbei sind der Sensor S und das Metallteil MT so angeordnet, daß die Mittenachse SM des Sensors S und die in der Z-Achse liegende Normale zu der Oberfläche des Metallteils MT miteinander fluchten. Das heißt, der Sensor S ist zentrisch über dem in dem Metallteil MT ausgebildeten Loch L angeordnet.

Bei dieser Ausrichtung des induktiven Sensors S bezüglich des Loches L in dem Metallteil MT wird dann das von der Sendespule SS des Sensors S erzeugte Streufeld gleichmäßig verformt, so daß in den vier Empfangsspulen ES1 bis ES4, welche auf dem Kreis K in gleichen Winkelabständen von 90° angeordnet sind, gleich große Spannungen induziert werden. Die Tatsache, daß in den vier symmetrisch angeordneten Empfangsspulen ES1 bis ES4 nur dann gleich große Spannungen induziert werden, wenn der induktive Sensor S zentrisch über dem Loch L angeordnet ist, kann beispielsweise zur Steuerung von Roboterbewegungen bzw. zur Steuerung der Hand eines Roboters, in welche der Sensor S eingesetzt ist, dahingehend ausgenutzt werden, daß die Lage der Roboterhand mit dem eingesetzten Sensor S bezüglich eines Loches, über welchem die Roboterhand zentriert werden soll, solange bewegt wird, bis in den vier Empfangsspulen ES1 bis ES4 jeweils gleich große Spannungen induziert werden.

Der Abstand des Sensors von der Oberfläche des Metallteils MT läßt sich durch ein Summieren der in den Empfangsspulen S1 bis ES4 induzierten Spannungen ermitteln.

Für die Meßgenauigkeit und den Meßbereich ist der Durchmesser des Kreises K von Bedeutung, auf welchem die Empfangsspulen ES1 bis ES4 angeordnet sind. Wenn hinsichtlich der Baugröße des Sensors S keine Beschränkungen bestehen, sollte der Durchmesser des Kreises K etwa gleich dem Durchmesser D eines zu erfassenden oder zu messenden Lochs L sein. Hierbei ergibt sich ein nahezu linearer Meßbereich, wenn in der X- und der Y-Richtung innerhalb der Grenzen von ± 0,5D gemessen wird. Zu Regelzwecken liegen die Grenzen bei etwa ± 0,9D, während der Meßbereich in der Z-Richtung etwa 2D beträgt. Die Meßgenauigkeit in der X- und der Y-Richtung wird bei einer Verkleinerung des Abstandes in der Z-Richtung zwischen dem Sensor S und beispielsweise dem Metallteil MT größer.

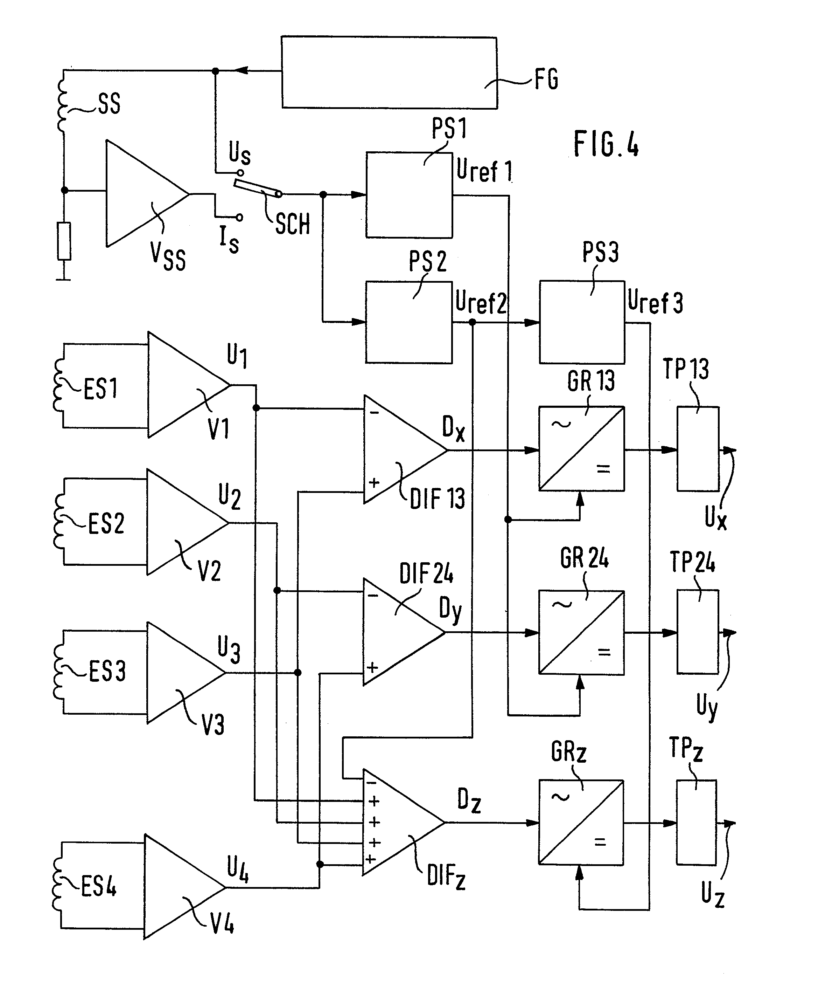

Nunmehr wird anhand von Fig.4 ein Blockschaltbild einer Schaltungsanordnung zur Durchführung des erfidungsgemäßen Verfahrens beschrieben. Die Schaltung besteht im wesentlichen aus drei Zweigen, nämlich aus zwei identisch aufgebauten Zweigen, in welchen die Signale verarbeitet werden, die zur Ermittlung einer Abweichung in der X- und der Y-Richtung dienen, und in welchen Spannungen $U_X$ und $U_Y$ erzeugt werden, und aus einem dritten Zweig, in welchem die Signale so zusammengeführt werden, daß aus einer sich ergebenden Ausgangsspannung $U_Z$ der Abstand des Sensors S von einer Metallfläche in der Z-Richtung ermittelt werden kann.

Die am Ausgang der Schaltungsanordnung der Fig.4 zur Signalauswertung zur Verfügung stehenden drei Spannungen $U_X$, $U_y$ und $U_z$ werden hierbei folgendermaßen erzeugt: Um die Spannungen $U_x$ bzw. $U_y$ zu erhalten, werden die in den Empfangsspulen ES1 und ES3 bzw. ES2 und ES4 induzierten Spannungen durch Verstärker $V_1$ und $V_3$ bzw. $V_2$ und $V_4$ vorverstärkt. Die Ausgangsspannung $U_1$ des Verstärkers $V_1$ und die Ausgangsspannung $U_3$ des Verstärkers $V_3$ werden dann in einem Differenzverstärker DIF13 voneinander subtrahiert und etwa um das 50-fache verstärkt. Die am Ausgang des Differenzverstärkers DIF13 anliegende Differenzspannung $D_x$ wird einem Synchrongleichrichter GR13 zugeführt, welchem ein Tiefpaßfilter TP13 nachgeschaltet ist, an dessen Ausgang dann für eine Weiterverarbeitung die Spannung $U_x$ zur Verfügung steht.

In ähnlicher Weise werden die Ausgangsspannung $U_2$ des der Empfangsspule ES2 nachgeschalteten Verstärkers V2 sowie die Ausgangsspannung $U_4$ des der Empfangsspule ES4 nachgeschalteten Verstärkers V4 in einem zweiten Differenzverstärker DIF24 voneinander subtrahiert und wieder etwa um das 50-fache verstärkt. Die am Ausgang des Differenzverstärkers DIF24 anliegende Spannung $D_y$ wird einem weiteren Synchrongleichrichter GR24 zugeführt, welchem wiederum ein Tiefpaßfilter TP24 nachgeschaltet ist, an dessen Ausgang für eine Weiterverarbeitung dann die Spannung $U_y$ zur Verfügung steht.

Die beiden Synchrongleichrichter GR13 und GR24 werden mittels einer Referenzspannung $U_{ref1}$ gesteuert. Die Phasenlage der Referenzspannung $U_{ref1}$ wird mittels eines Phasenschiebers PS1 eingestellt und wird wahlweise entweder aus der von einem Frequenzgenerator FG gelieferten Versorgungsspannung $U_S$ für die Sendespule SS oder aus dem durch die Sendespule SS fließenden Strom $I_S$ abgeleitet, wobei der Sendespule SS ein Vorverstärker $V_{SS}$ nachgeschaltet ist. Das Umschalten erfolgt über einen schematisch angedeuteten Schalter SCH, dessen feststehende Kontakte mit $U_S$ bzw. $I_S$ bezeichnet sind.

Zur Bestimmung der Spannung $U_z$ werden alle vier in den Empfangsspulen ES1 bis ES4 induzierten und über die Verstärker V1 bis V4 verstärkten Spannungen $U_1$ bis $U_4$ phasengleich addiert. Die Summe der vier verstärkten Spulenspannungen $U_1$ bis $U_4$ wird dann von einer über einen zweiten Phasenschieber PS2 eingestellten, entweder aus der Versorgungsspannung $U_S$ oder aus dem Strom $I_S$ abgeleiteten Referenzspannung $U_{ref2}$ in einem weiteren Differenzverstärker $DIF_z$ subtrahiert und anschließend um etwa das 10-fache verstärkt; hierzu wird sowohl die Phase als auch die Amplitude der Referenzspannung $U_{ref2}$ genau abgeglichen. Die am Ausgang des Differenzverstärkers DIF2 anliegende Spannung $D_z$ wird in einem weiteren Synchrongleichrichter $GR_z$ ver-

stärkt. Dieser Synchrongleichrichter $GR_z$ wird von einer dritten Referenzspannung $U_{ref3}$ gesteuert, die von der zweiten Re-ferenzspannung $U_{ref2}$ abgeleitet ist und deren Phase mittels eines dritten Phasenschiebers PS3 eingestellt wird. Dem Synchrongleichrichter $GR_z$ ist ein weite- res Tiefpaßfilter $TP_z$ nachgeschaltet, an dessen Ausgang zur Weiterverarbeitung schließlich die Spannung $U_z$ anliegt.

Zwischen den durch die in Fig.4 wiedergegebene Schaltungsanordnung erhaltenen Spannungen und der relativen Position des Sensors S und beispielsweise des Lochs L (Fig.3) besteht ein eindeutiger Funktionszusammenhang. Der Abstand Z von dem Sensor S zur Oberfläche des Metallteils MT ergibt sich aus der mit Hilfe der Schaltungsanordnung der Fig.4 ermittelten Spannung $U_z$ aufgrund der nachstehenden Formel:

$$Z = A \cdot \ln \left( \frac{B}{U_z} \right)$$

Für eine Mittenabweichung X und Y der Sensor-Mittenachse MS von der durch den Lochmittelpunkt verlaufenden Normalen ergibt sich aus den mittels der Schaltungsanordnung der Fig.4 ermittelten Spannungen $U_x$ bzw. $U_y$ aufgrund der bei- den nachstehenden Formeln:

$$X = D \cdot U_x \cdot e^{\left( \frac{Z}{C} \right)}$$
$$Y = D \cdot U_y \cdot e^{\left( \frac{Z}{C} \right)}$$

Die in den drei Formeln verwendeten vier Parameter A, B, C und D sind durch die Sensorspulen, deren geometrische Anordnung, deren Windungszahlen und durch die verwendeten Kerne sowie durch die mit der Schaltungsanordnung der Fig.4 eingestellten Verstärkungsfaktoren festgelegt. Die Umrechnung der am Ausgang der Schaltungsanordnung der Fig.4 anliegenden Spannungen $U_x$, $U_y$, $U_z$ in die tatsächli-

0172998

chen Entfernungen bzw. Abstände X, Y und Z erfolgt unter Zugrundelegung der vorstehend angeführten Formeln vorzugsweise durch einen Mikrorechner. Die Umrechnung kann jedoch auch mittels einer analogen Rechenschaltung durchgeführt werden.

Der Sensor S ist insbesondere für einen Einsatz an einem Roboterarm entwickelt worden. Der Sensor S eignet sich daher für alle Aufgaben, bei welchen die Roboterhand beispielsweise zentrisch zu Löchern oder Bohrungen ausgerichtet werden muß, um beispielsweise Niete zu setzen, Schraubbolzen einzudrehen oder Schutzkappen in Löcher einzudrücken, wie sie beispielsweise in Radkästen, an Front- oder Seitenblechen ausgebildet sind, welche in der Autoindustrie verwendet werden. Da solche Schutzkappen im allgemeinen aus Gummi oder einem entsprechend elastischen Kunststoff bestehen, wird durch Schutzkappen aus solchen Materialien das von der Sendespule SS des Sensors S erzeugte Streufeld nicht beeinträchtigt. Dies hat in der Praxis den Vorzug, daß eine derartige Schutzkappe beispielsweise mittels eines geringen Unterdrucks von dem in einen Roboterarm eingesetzten Sensor aufgenommen werden kann, bevor der Sensor bezüglich des Loches, in welches die Schutzkappe eingedrückt werden soll, ausgerichtet wird.

Sobald dann eine zentrische Ausrichtung des Sensors bezüglich des Loches erfolgt ist, an dessen Unterseite die bezüglich des Sensors zentrisch ausgerichtete Schutzkappe gehalten ist, kann derselbe Sensor in einem solchen Fall gleichzeitig auch noch als Stempel benutzt werden, mit dessen Hilfe dann die Schutzkappe bei einer entsprechenden Bewegung des Roboterarms in das Loch eingedrückt wird, über welchem der Sensor vorher zentrisch ausgerichtet worden ist. Durch den verhältnismäßig großen Meßbereich und die gleichzeitige Erfassung von drei Koordinaten mittels des induktiven Sensors und der diesem nachge-

0172998

schalteten Schaltungsanordnung lassen sich somit Roboterbewegungen bzw. Bewegungen der Roboterhand beispielsweise beim Anfahren von Löchern sehr viel schneller und genauer durchführen, wobei, wie vorstehend beschrieben, dann anschließend eine entsprechende Bewegung des Roboterarms entlang der Z-Richtung beispielsweise auch noch eine Schutzkappe in das unmittelbar vorher angefahrene Loch eingedrückt werden kann.

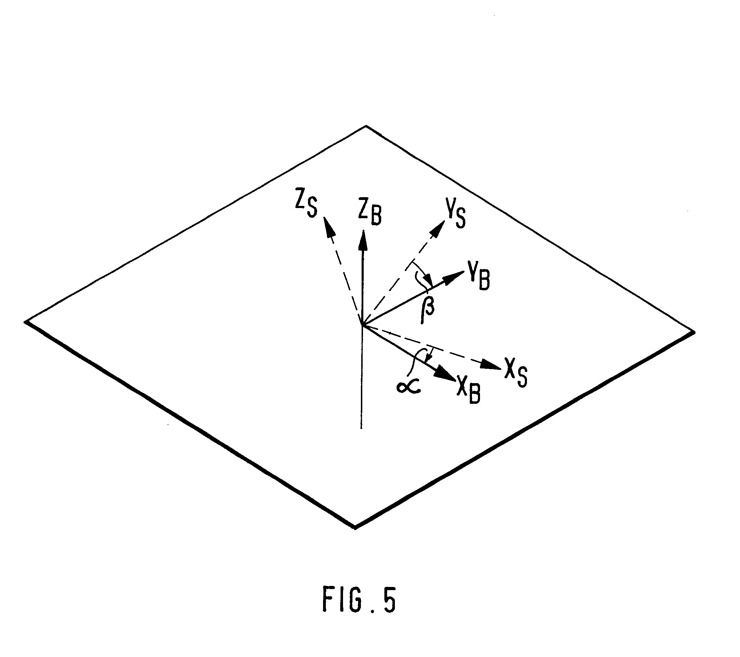

Der induktive Sensor S gemäß der Erfindung kann auch bei homogenen Blechen, d.h. bei Blechen, in welchen keine Löcher ausgebildet sind, oder an bzw. in welchen keine Niete oder Schrauben angebracht sind, verwendet werden, um den Abstand zwischen dem Sensor und der Oberfläche beispielsweise eines Blechs B zu ermitteln, und um die beiden Winkel zwischen der Sensor-Mittenachse SM und der Normalen auf die Oberfläche des Blechs B zu erfassen. Hierzu sind in Fig.5 außer dem Blech B ein diesem Blech zugeordnetes Koordinatensystem mit den Achsen $X_B$, $Y_B$ und $Z_B$ sowie ein einem nicht dargestellten Sensor zugeordnetes Koordinatensystem mit den Achsen $X_S$, $Y_S$ und $Z_S$ angedeutet. Mit Hilfe des induktiven Sensors S gemäß der Erfindung und einer nachgeordneten Schaltungsanordnung, welche im Prinzip der in Fig.4 dargestellten Schaltungsanordnung entspricht, können dann Spannungen $U_\alpha$ und $U_\beta$ abgeleitet werden, aus welchen dann die Winkel $\alpha$ und $\beta$ errechnet werden können, die ein Maß für die Abweichung der der Mittenachse SM eines Sensors S entsprechenden Achse $Z_S$ von der mit der Achse $Z_B$ zusammenfallenden Flächennormalen des Blechs B sind.

Ende der Beschreibung

DIPL.-ING. A. v. KIRSCHBAUM
PATENTANWALT

D-8034 GERMERING
HERMANN-BHL-STR. 91
0172998

TELEFON: (089) 84 1 10 46

Anwaltsakte: DFO-8508 EPA


Deutsche Forschungs- und Versuchsanstalt für Luft- und Raumfahrt e.V.
5000 K ö l n 90


P a t e n t a n s p r ü c h e


1. Induktiver Sensor, dadurch g e k e n n z e i c h -
n e t, daß in der Mitte des Sensors (S), symmetrisch zu
dessen Mittenachse (SM), eine vertikal ausgerichtete
Sendespule (SS) vorgesehen ist, und daß symmetrisch zur
Mittenachse (SM) der Sendespule (SS) auf einem Kreis (K)
vier identische, in gleichen Winkelabständen voneinander,
vertikal ausgerichtete Empfangsspulen (ES1 bis ES4) so
angeordnet sind, daß zumindest die Endflächen der vier
Empfangsspulen (ES1 bis ES4) in einer zu ihren Mittenachsen (EM1 bis EM4) und zur Mittenachse (SM) der Sendespule (SS) senkrecht verlaufenden Ebene liegen.

2. Induktiver Sensor nach Anspruch 1, dadurch g e -
k e n n z e i c h n e t, daß der Durchmesser des Kreises
(K), auf welchem die vier Empfangsspulen (ES1 bis ES4)
angeordnet sind, vorzugsweise etwa gleich dem Durchmesser
(D) von Löchern (L), Bohrungen, Bolzen, Niete u.ä. ist,
deren Position zu erfassen ist.

3. Verfahren zur berührungslosen, dreidimensionalen Positionserfassung von Löchern, Bohrungen, Bolzen, Niete u.ä.
in bzw. an Metallteilen mittels des induktiven Sensors
nach den Ansprüchen 1 und 2, dadurch g e k e n n -

- 2 -

z e i c h n e t , daß zur Ermittlung von einer Abweichung in X- und Y-Richtung entsprechenden Spannungen ($U_x$, $U_y$) die von jeweils zwei in dem Sensor (S) diagonal zueinander angeordneten Empfangsspulen (ES1, ES3; ES2, ES4) erhaltenen und gegebenenfalls verstärkten Spannungen (U1, U3 und U2, U4) in je einem Differenzverstärker (DIF13, DIF24) voneinander subtrahiert und anschließend verstärkt werden, und daß die Ausgangsspannungen ($D_x$, $D_y$) der Differenzverstärker (DIF13, DIF24) jeweils über einen durch eine Referenzspannung ($U_{ref1}$) gesteuerten Synchrongleichrichter (GR13, GR24) und anschließend über diesen Gleichrichtern (GR13, GR24) nachgeschaltete Tiefpaßfilter (TP13, TP24) geleitet werden, und daß zur Ermittlung einer dem Abstand in Z-Richtung entsprechenden Spannung ($U_z$) die von den Empfangsspulen (ES1 bis ES4) erhaltenen und gegebenenfalls verstärkten Spannungen (U1 bis U4) phasengleich addiert und dann von einer aus der Spannung oder dem Strom der Sendespule (SS) abgeleiteten Referenzspannung ($U_{ref2}$) subtrahiert werden, und daß das verstärkte Signal ($D_z$) über einen durch eine in der Phase einstellbare Spannung ($U_{ref3}$) gesteuerten Synchrongleichrichter ($GR_z$) sowie über ein dem Gleichrichter nachgeschaltetes Tiefpaßfilter ($TP_z$) geleitet wird.

4. Verfahren nach Anspruch 3, dadurch g e k e n n - z e i c h n e t , daß die drei den Abweichungen in X- und Y-Richtung und dem Abstand in Z-Richtung entsprechenden Spannungen ( $U_x$, $U_y$, $U_z$) mittels eines Digitalrechners durch folgende, nichtlineare Funktionen in wegproportionale Werte umgerechnet werden:

$$X = D \cdot U_x \cdot e^{(\frac{Z}{C})}$$

$$Y = D \cdot U_y \cdot e^{(\frac{Z}{C})}$$

$$Z = A \cdot \ln \left( \frac{B}{U_z} \right)$$

0172998

wobei die Parameter A, B, C und D durch die Sensorspulen, deren geometrische Anordnung, die jeweiligen Windungszahlen, die verwendeten Kerne sowie durch die eingestellten Verstärkungsfaktoren vorgegeben sind.

FIG. 2

FIG. 1

FIG. 3

0172998

FIG.4

0172998

FIG.5

Europäisches
Patentamt

**EUROPÄISCHER RECHERCHENBERICHT**

0172998
Nummer der Anmeldung

## EINSCHLÄGIGE DOKUMENTE

EP 85106363.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE - B2 - 2 361 385 (MAX-PLANCK-GES.) | 1 | G 01 B 7/14 |
| Y | * Gesamt * | 3 | G 01 D 5/20 |
| | -- | | |
| X | GB - A - 800 131 (FERRANTI) | 1,2 | |
| Y | * Gesamt * | 3 | |
| | -- | | |
| A | US - A - 4 030 346 (DAHLE)  * Gesamt * | | |
| | -- | | |
| A | GB - A - 2 067 765 (CENTRO RICERCHE)  * Gesamt * | | |
| | ---- | | |

RECHERCHIERTE
SACHGEBIETE (Int. Cl.4)

G 01 B 7/00
G 01 D 5/00

Der vorliegende Recherchenbericht wurde für alle Patentansprüche erstellt.

| Recherchenort | Abschlußdatum der Recherche | Prüfer |
|---|---|---|
| WIEN | 28-08-1985 | TOMASELLI |